(19) Europäisches Patentamt
European Patent Office
Office européen des brevets

(11) **EP 4 160 901 A1**

(12) **EUROPEAN PATENT APPLICATION**
published in accordance with Art. 153(4) EPC

(43) Date of publication:
**05.04.2023 Bulletin 2023/14**

(21) Application number: **21812217.4**

(22) Date of filing: **15.04.2021**

(51) International Patent Classification (IPC):
**H02M 7/49** *(2007.01)*   **H02M 7/797** *(2006.01)*

(52) Cooperative Patent Classification (CPC):
**H02M 7/49; H02M 7/797**

(86) International application number:
**PCT/JP2021/015556**

(87) International publication number:
**WO 2021/241054 (02.12.2021 Gazette 2021/48)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **25.05.2020 JP 2020090327**

(71) Applicant: **Hitachi, Ltd.**
**Tokyo 100-8280 (JP)**

(72) Inventors:
• **WATANABE, Kenta**
**Tokyo 100-8280 (JP)**
• **KIKUCHI, Akira**
**Tokyo 100-8280 (JP)**
• **KAWAZOE, Hironari**
**Tokyo 100-8280 (JP)**
• **KIYOFUJI, Yasuhiro**
**Tokyo 100-8280 (JP)**

(74) Representative: **Mewburn Ellis LLP**
**Aurora Building**
**Counterslip**
**Bristol BS1 6BX (GB)**

(54) **CONTROL DEVICE AND CONTROL METHOD FOR POWER CONVERSION DEVICE**

(57) A control device and a control method for a highly efficient power conversion device are provided. A control device for a modular multi-level power conversion device including one or more arm converters per AC phase, each having a plurality of unit converters each with an energy storage element connected in series, including: AC current control means for controls an AC current to a desired value by feedback; circulating current control means for controlling a circulating current flowing through the arm converter of each phase of the AC current of the modular multi-level power conversion device to a circulating current command value by feedback; and PWM command generation means for generating and controlling a gate signal of the unit converter configuring the arm converter according to an AC voltage target of the each AC phase obtained by correcting an output of the AC current control means according to an output of the circulating current control means, in which the circulating current control means includes circulating current command calculation means for calculating an amplitude of the circulating current command value according to a power factor of the power conversion device.

FIG. 3

**Description**

Technical Field

The present invention relates to a control device and a control method for a power conversion device configured with a modular multilevel converter (hereinafter abbreviated as MMC converter).

Background Art

An MMC converter is configured by connecting in series multiple unit converters configured by a voltage source such as a capacitor, which is an energy storage element, and a half-bridge circuit. The unit converter generates a desired voltage by controlling a PWM modulation rate of the half bridge circuit. The multiple unit converters are connected in series to form a two-terminal arm converter. A first terminal of the arm converter is connected to each phase terminal of an AC power supply, and a star-connected second terminal is connected to a terminal of a DC power supply.

The arm converter connected to each phase in this way generates a desired AC voltage and controls an AC current, and at the same time, superimposes the DC current to realize power conversion with the DC power supply.

Control of the MMC converter includes current control that adjusts an arm current flowing in the arm converter according to an AC current command and a DC current command from the outside, a function (hereafter referred to as circulating current control) that adjusts a circulating current for balancing total stored energy of the capacitor in the arm converter between the arm converters, and a function (hereinafter referred to as inter-cell balance control) that mutually adjusts the PWM modulation rate of the half-bridge circuit provided in the unit converter within the arm to balance an average voltage of the capacitor between the unit converters. Of these, in order to realize circulating current control, a circuit element for suppressing the circulating current flowing between the arm converters is required.

Patent Literature 1 discloses a double-star MMC converter (hereinafter abbreviated as a DSMC converter), which is one form of the MMC converter. Patent Literature 1 discloses that a circulating current flowing between the arm converters can be suppressed by providing an inductance between the first terminal of each arm converter and the AC power supply terminal. Also, Patent Literature 1 discloses the use of a second harmonic circulating current to balance the total stored energy of the capacitors in the arm converters between the arm converters. The present invention is directed to a method of controlling a power conversion device configured with a DSMMC converter as disclosed in Patent Literature 1.

The voltage of the capacitor in the unit converter fluctuates by repeating charging and discharging at a cycle determined by an output AC frequency of the DSMMC converter. For example, in the case of a large-capacity DSMMC converter used in DC power transmission equipment or frequency conversion equipment, a large current flows through each unit converter, resulting in large capacitor voltage fluctuations. In that case, since a peak voltage value of the voltage fluctuation becomes high, it is necessary to increase a voltage rating of the capacitor, which poses a problem of increasing the size of the DSMMC converter.

To solve the above problem, for example, Patent Literature 2 discloses that in the DSMMC converter, a circulating current containing frequency components that are even multiples of a system frequency of an AC system is caused to flow through the arm converter to reduce capacitor voltage fluctuations.

Citation List

Patent Literature

Patent Literature 1: Japanese Unexamined Patent Application Publication (translation of PCT application) No. 2010-512133
Patent Literature 2: Japanese Unexamined Patent Application Publication No. 2013-251933

Summary of Invention

Technical Problem

A circulating current is a current that circulates inside the arm converter without flowing through either an AC power supply or a DC power supply. The role of the power conversion device is to realize power conversion between different power supplies. Therefore, in order to realize a highly efficient power conversion device, it is desirable to be able to minimize the circulating current.

Regarding this point, Patent Literature 1 does not disclose a specific means for determining the circulating current. Patent Literature 2 discloses means for reducing the amount of voltage fluctuation of a capacitor by generating a secondary harmonic circulating current command value from an AC current command value. On the other hand, since the power conversion device generates a desired AC power due to a phase difference between the output AC voltage and the AC current, a capacitor voltage fluctuation waveform of the DSMMC converter changes depending on a power factor of the power conversion device. Therefore, it is desirable to generate a necessary circulating current in consideration of the power factor in order to realize a highly efficient power conversion device, but Patent Literature 2 still has the problem of not having such means.

In view of the above, an object of the present invention is to solve the above problems and provide a control device and a control method for a highly efficient power conversion device.

Solution to Problem

In view of the above, according to the present invention, there is provided a control device for a modular multi-level power conversion device including one or more arm converters per AC phase, each having a plurality of unit converters each with an energy storage element connected in series, the control device for the power conversion device including: AC current control means for controlling an AC current to a desired value by feedback; a circulating current control means for controlling a circulating current flowing through the arm converter of each phase of the AC current of the modular multi-level power conversion device to a circulating current command value by feedback; and PWM command generation means for generating and controlling a gate signal of the unit converter configuring the arm converter according to an AC voltage target of the each AC phase obtained by correcting an output of the AC current control means according to an output of the circulating current control means, in which the circulating current control means includes a circulating current command calculation means for calculating an amplitude of the circulating current command value according to a power factor of the power conversion device.

In addition, according to the present invention, there is provided a control method for a modular multi-level power conversion device including one or more arm converters for each phase of AC current, each having a plurality of unit converters having energy storage elements connected in series, including: generating and controlling a gate signal of the unit converter configuring the arm converter according to an AC voltage target of the each AC phase obtained by correcting an AC current control output for controlling an AC current to a desired value by feedback with a circulating current control output for controlling a circulating current flowing through the arm converter of each AC phase of the modular multi-level power conversion device to a circulating current command value by feedback; and determining an amplitude of the circulating current command value according to the power factor of the power conversion device.

Advantageous Effects of Invention

According to the present invention, there can be provided a highly efficient control device and method for a power conversion device, since a required circulating current is generated in consideration of the power factor.

Brief Description of Drawings

Figure 1 is a diagram showing a configuration example of a general power conversion device to which the present invention can be applied.

Figure 2 is a diagram showing a configuration example of a general arm converter to which the present invention is applicable.

Figure 3 is a diagram showing a configuration example showing a block configuration example of a control device according to Example 1 of the present invention.

Figure 4 is a diagram showing a configuration example of circulating current command calculation means 312 according to Example 1 of the present invention.

Figure 5 is a diagram showing input/output characteristics of circulating current amplitude calculation means 401.

Figure 6 is a diagram showing a relationship between a capacitor voltage $V_{CUP\_1}$ and an output voltage command $V_{UP}^*$ during operation with a power factor (inductive) of 0.

Figure 7 is a diagram showing a relationship between the capacitor voltage $V_{CUP\_1}$ and the output voltage command $V_{UP}^*$ during operation with the power factor of 1.

Figure 8 is a diagram showing a relationship between a capacitor voltage $V_{CUP\_1}$ and the output voltage command $V_{UP}^*$ during operation with the power factor (capacitive) of 0.

Figure 9 is a diagram showing a relationship between a phase compensation element and an output voltage command (peak value).

Figure 10 is a diagram showing an example of operating waveforms when cosɸ=0 (inductive).

Figure 11 is a diagram showing an example of operating waveforms when cosɸ=1.

Figure 12 is a diagram showing a configuration example of a power conversion device according to Example 2 of the present invention.

Figure 13 is a diagram showing another configuration example of the power conversion device according to Example 2 of the present invention.

Figure 14 is a diagram showing a configuration example of circulating current command calculation means according to Example 2 of the present invention.

Figure 15 is a diagram showing a configuration example of circulating current command calculation means according to Example 3 of the present invention.

Figure 16 is a diagram showing input/output characteristics of circulating current amplitude calculation means according to Example 3 of the present invention.

Figure 17 is a diagram showing another configuration example of the circulating current amplitude calculation means according to the Example 3 of the present invention.

Figure 18 is a diagram showing a configuration example of a storage device according to Example 3 of the present invention.

Figure 19 is a diagram showing a configuration example of circulating current command calculation means according to Example 3 of the present invention.

Description of Embodiments

Hereinafter, examples of a control device and method for a power conversion device according to the present invention will be described with reference to the drawings. In addition, the present invention is not limited by the examples.

Example 1

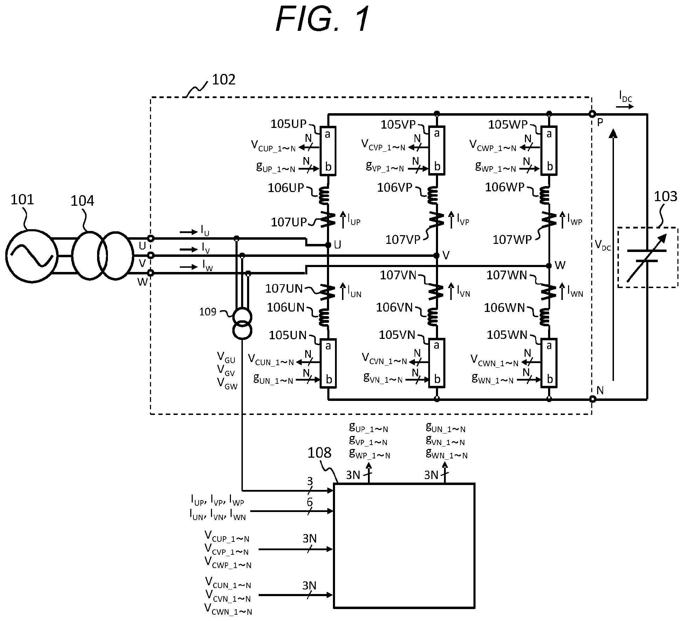

Figure 1 is a diagram showing a configuration example of a general power conversion device to which the present invention is applicable.

In Figure 1, a power conversion device 102 is connected to an AC power system 101 through a transformer 104. The power conversion device 102 is connected to variable DC voltage source 103. With the configuration described above, a power interchange between the AC power system 101 and the variable DC voltage source 103 can be realized. The power conversion device 102 is configured by a DSMMC converter.

The power conversion device 102 is configured by so-called Graetz connection of six sets of arms in which arm converters 105 and reactors 106 are connected in series. Specifically, the power conversion device 102 includes six arm converters 105 (105UP, 105UN, 105VP, 105VN, 105WP, 105WN) each having two output terminals, a terminal a and a terminal b, and six circulating current suppression reactors 106 (106UP, 106UN, 106VP, 106VN, 106WP, 106WN). Further, the power conversion device 102 includes six current detectors 107 (107UP, 107UN, 107VP, 107VN, 107WP, 107WN) for detecting arm currents I ($I_{UP}$, $I_{UN}$, $I_{VP}$, $I_{VN}$, $I_{WP}$, and $I_{WN}$) of each phase in order to acquire control signals.

A control device 108 detects and receives arm currents from six current detectors 107 and output AC voltages $V_G$ ($V_{GU}$, $V_{GV}$, $V_{GW}$) of the power conversion device 102 from the AC voltage detector 109, and provides a gate control signal g for the six arm converters 105. In the description of the present invention, the AC phases are represented by U, V, and W, and the positive and negative of a DC circuit are represented by PN. In addition, in each drawing subsequent to Figure 1, the notations of 3, 6, and 3N for various signal lines indicate the total number of signal lines described as one.

In the power conversion unit of Figure 1, the terminals b of the arm converters 105UP, 105VP, and 105WP on the positive side and the terminals a of the arm converters 105UN, 105VN, and 105WN on the negative side are connected to AC power supply terminals (terminal U, terminal V, terminal V) through the circulating current suppression reactors 106 (106UP, 106UN, 106VP, 106VN, 106WP, 106WN). The terminals a of the positive side arm converters 105UP, 105VP, and 105WP and the terminals b of the negative side arm converters 105UN, 105VN, and 105WN are connected to the positive and negative terminals (terminal P, terminal N) of DC. The variable DC voltage source 103 is also connected to the DC terminal.

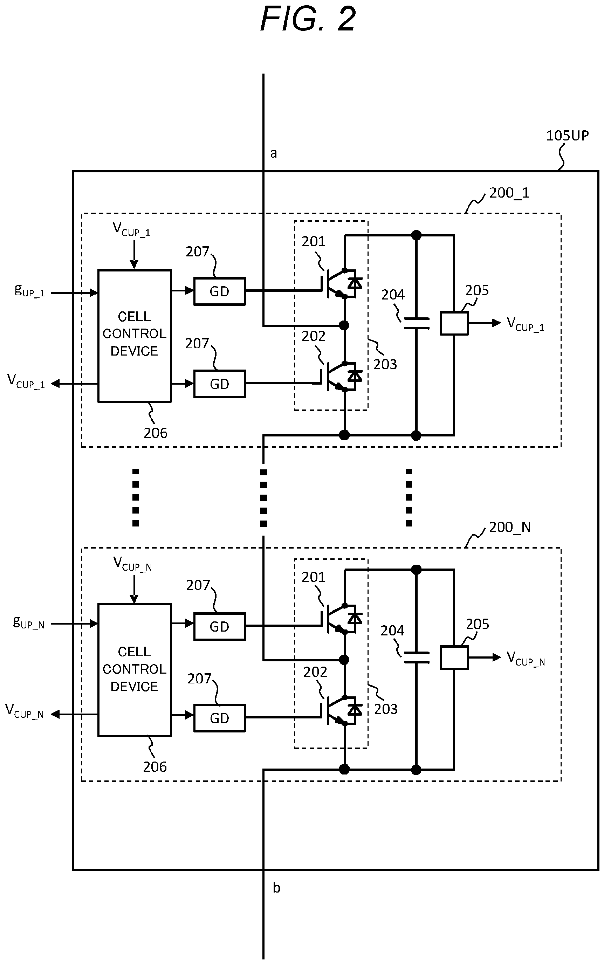

Figure 2 is a diagram showing a configuration example of a general arm converter to which the present invention is applicable. Hereinafter, the arm converter 105UP will be described as a representative, but since the other arm converters 105UN, 105VP, 105VN, 105WP, and 105WN have the same configuration, the description of the other arm converters will be omitted.

The arm converter 105UP is a circuit in which N unit converters 200 (200_1 to 200_N) are connected in series. The unit converter 200 is a case of using a half-bridge circuit, and N is the number of unit converters per arm converter.

The unit converter 200 has a switching circuit 203 in which two switching elements 201 and 202 with freewheeling diodes connected in parallel are connected in series, a capacitor 204 as an energy storage element, and a voltage detector 205, which are connected in parallel. The unit converter 200 also has a cell control device 206 and two gate drive circuits 207. Terminals a and b in Figure 2 are output terminals of the arm converter 105UP and correspond to the terminals a and b of the arm converter in Figure 1.

The voltage detector 205 detects a capacitor voltage of each unit converter and transmits a detected capacitor voltage $V_C$ ($V_{CUP\_1}$ to $V_{CUP\_N}$) to the cell control device 206 of each unit converter 200.

The cell control device 206 distributes gate commands g ($g_{UP\_1}$ to $g_{UP\_N}$) of the unit converter, which are sent from the control device 108 in Figure 1 to the gate drive circuit 207. Also, the cell control device 206 sends the capacitor voltages $V_{CUP\_1}$ to $V_{CUP\_N}$ detected by voltage detector 205 to the control device 108.

The gate drive circuit 207 generates a gate drive signal for switching on/off switching elements 201 and 202 in accordance with the gate command g, and supplies the signal to the switching elements 201 and 202.

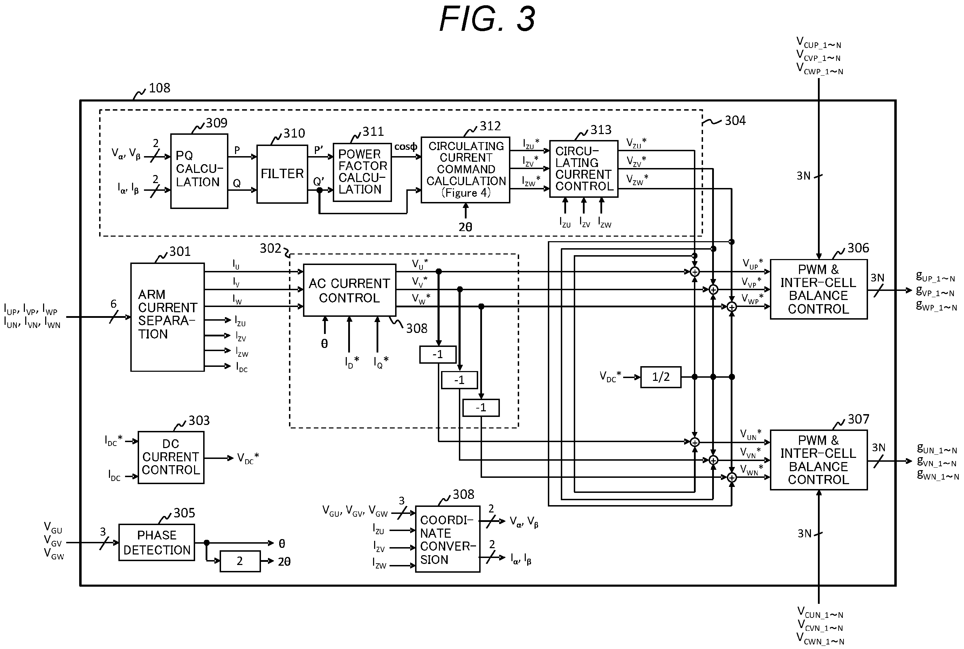

Figure 3 is a diagram showing a configuration example of a control device according to Example 1 of the present invention. The control device 108 receives arm currents I ($I_{UP}$, $I_{UN}$, $I_{VP}$, $I_{VN}$, $I_{WP}$, $I_{WN}$) and all 6×N unit converter capacitor voltages $V_C$ ($V_{CUP\_1}$ to $V_{CUP\_N}$, $V_{CUN\_1}$ to $V_{CUN\_N}$, $V_{CVP\_1}$ to $V_{CVP\_N}$, $V_{CVN\_1}$ to $V_{CVN\_N}$, $V_{CWP\_1}$ to $V_{CWP\_N}$, $V_{CWN\_1}$ to $V_{CWN\_N}$) and output AC voltage $V_G$ ($V_{GU}$, $V_{GV}$, $V_{GW}$) , and outputs 6×N gate commands g ($g_{UP\_1}$ to $g_{UP\_N}$, $g_{UN\_1}$ to $g_{UN\_N}$, $g_{VP\_1}$ to $g_{VP\_N}$, $g_{VN\_1}$ to $g_{VN\_N}$, $g_{WP\_1}$ to $g_{WP\_N}$, $g_{WN\_1}$ to $g_{WN\_N}$) to be given to each unit converter.

The control device 108 includes arm current separation means 301, AC current control means 302, DC current control means 303, circulating current control means 304, phase detection means 305, PWM command generation means 306 for the P-side arm converter, PWM command generation means 307 for the N-side arm converter, and coordinate transformation means 308.

In the configuration of the control device 108, the present invention reflects the output of the circulating current control means 304 in the output of the AC current control means 302, as the target signals of the PWM command generation means (PWM & inter-cell balance control) 306 and 307 of the PN side arm converter). Other means 301, 303, 305, and 308 generate signals used in the processing executed in the present invention, and those internal processing has been known in Patent Literature 1 and Patent Literature 2, and therefore, only an outline of those means will be described here.

The arm current separation means 301 receives arm currents I ($I_{UP}$, $I_{UN}$, $I_{VP}$, $I_{VN}$, $I_{WP}$, $I_{WN}$) and generates AC currents $I_u$, $I_v$, $I_w$, circulating currents $I_{zu}$, $I_{zv}$, $I_{zw}$ circulating between the upper and lower arms of the converters, and a DC current $I_{DC}$. Among those currents, the circulating currents $I_{zu}$, $I_{zv}$, and $I_{zw}$ used in circulating current control means 304 can be obtained from the following Expressions (1), (2), and (3).

[Ex. 1]

$$I_{zu} = (I_{UP} + I_{UN})/2 - I_{DC}/3 \qquad (1)$$

[EX. 2]

$$I_{zv} = (I_{VP} + I_{VN})/2 - I_{DC}/3 \qquad (2)$$

[Ex. 3]

$$I_{zw} = (I_{WP} + I_{WN})/2 - I_{DC}/3 \qquad (3)$$

The DC current control means 303 receives the DC current $I_{DC}$ and its target current $I_{DC}^*$ to generate a DC voltage target value $V_{DC}^*$. The phase detection means 305 receives output AC voltages $V_G$ ($V_{GU}$, $V_{GV}$, $V_{Gw}$) and generates phases θ and 2θ. The coordinate transformation means 308 receives three-phase output AC voltages $V_G$ ($V_{GU}$, $V_{GV}$, $V_{GW}$), converts the received voltages into orthogonal two-axis coordinate voltages $V_\alpha$ and $V_\beta$, and receives three-phase circulating currents $I_{zu}$, $I_{zv}$, $I_{zw}$ and converts the received currents into orthogonal two-axis coordinate currents $I_\alpha$ and $I_\beta$.

The AC current control means 302 transforms coordinate of the three-phase AC currents $I_u$, $I_v$, and $I_w$ into two-axis currents $I_\alpha$ and $I_\beta$ with using a phase angle of θ, and it operates to a difference between the two-axis currents and the target two-axis current values $I_\alpha^*$ and $I_\beta^*$ which are preset through the respective current regulators. Further, the AC current control means 302 generates and outputs three-phase output AC voltage set values $V_G^*$ ($V_{GU}^*$, $V_{GV}^*$, $V_{GW}^*$) by inverse coordinate transformation from two-axis to three-axis.

The circulating current control means 304, which is a main circuit portion of the present invention, includes PQ calculation means 309, a filter circuit 310, power factor calculation means 311, circulating current command calculation means 312, and circulating current control means 313.

Among those means, the PQ calculation means 309 calculates an active power P and a reactive power Q output by the power conversion device 102 from output AC voltages $V_\alpha$ and $V_\beta$ and the AC currents $I_\alpha$ and $I_\beta$ obtained from the coordinate transformation means 308. The active power P and the reactive power Q are calculated by the following Expressions (4) and (5).
[Ex. 4]

$$P = V_\alpha \times I_\alpha + V_\beta \times I_\beta \quad (4)$$

[Ex. 5]

$$Q = V_\alpha \times I_\beta - V_\beta \times I_\alpha \quad (5)$$

The filter circuit 310 removes high-frequency components contained in the active power P and the reactive power Q. The power factor calculation means 311 calculates a power factor $\cos\phi$ from the active power P' and the reactive power Q', from which high frequency components have been removed, obtained from the filter circuit 310. The power factor $\cos\phi$ is calculated by (6) below.
[Ex. 6]

$$\cos\phi = P'/\{(P'^2 + Q'^2)^{1/2}\} \quad (6)$$

The circulating current command calculation means 312 is means for calculating the circulating current commands $I_{zu}^*$, $I_{zv}^*$, $I_{zw}^*$ of each phase using the power factor $\cos\phi$ as an input. A specific method of calculating the circulating current commands $I_{zu}^*$, $I_{zv}^*$, and $I_{zw}^*$ will be described later.

The circulating current control means 313 is means for causing the circulating currents $I_{zu}$, $I_{zv}$, and $I_{zw}$ of each phase to follow the circulating current commands $I_{zu}^*$, $I_{zv}^*$, and $I_{zw}^*$. The circulating current control means 313 includes a proportional controller or a proportional integral controller, and generates circulating voltage command values $V_{ZU}^*$, $V_{ZV}^*$, and $V_{ZW}^*$ such that the circulating current of each phase follows the command value.

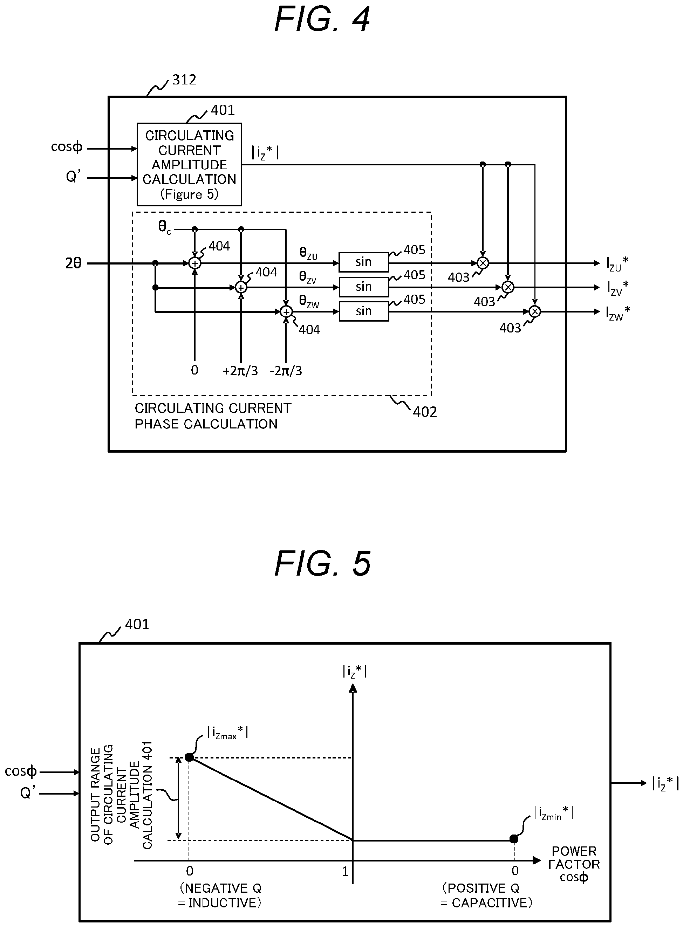

A method of calculating the circulating current commands $I_{zu}^*$, $I_{zv}^*$, and $I_{zw}^*$ will be described with reference to Figures 4 to 9. First, Figure 4 is a diagram showing a configuration example of the circulating current command calculation means 312 according to Example 1 of the present invention. The circulating current command calculation means 312 of Figure 4 includes circulating current amplitude calculation means 401, circulating current phase calculation means 402, and a multiplier 403.

First, the calculation method of the circulating current amplitude calculation means 401 will be described with reference to Figure 5. Figure 5 is an input/output characteristic diagram of the circulating current amplitude calculation means 401 according to Example 1 of the present invention. The horizontal axis represents the power factor $\cos\phi$, and the vertical axis represents the current amplitude $|I_z^*|$ of the circulating current commands $I_{zu}^*$, $I_{zv}^*$, and $I_{zw}^*$. In this example, the power factor $\cos\phi$ calculated by Expression (6) cannot distinguish between the inductive and capacitive properties of the reactive power Q'. Therefore, the circulating current amplitude calculation means 401 receives the reactive power Q' as an input and determines whether it is inductive or capacitive based on the sign of Q'.

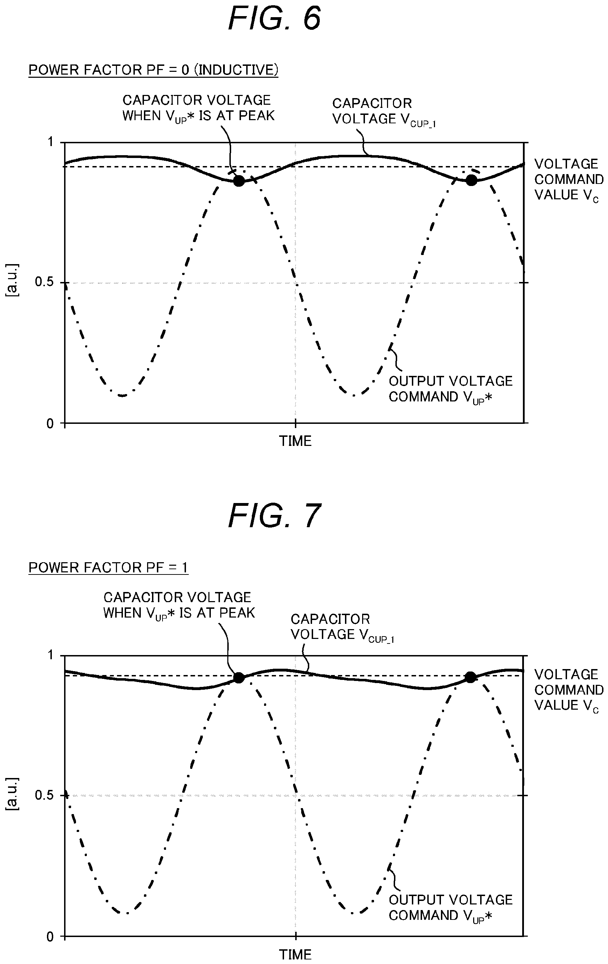

The circulating current amplitude calculation means 401 has an input/output characteristic in which the current amplitude $|I_{zmax}^*|$ at the time of $\cos\phi=0$ (inductive) decreases linearly to a power factor of 1 as a peak value. At the time of $\cos\phi=1$ to $\cos\phi=0$ (capacitive), the current amplitude $|I_{zmin}^*|$ has constant input/output characteristics. In other words, the calculation is performed to increase the circulating current only during the period of $\cos\phi=0$ (inductive), and the minimum circulating current is allowed to flow to keep a voltage balance of the capacitor during a period from $\cos\phi=1$ to $\cos\phi=0$ (capacitive). The reason to perform the above operation will be described with reference to Figures 6 to 8.

Figure 6 is a diagram showing a relationship between the capacitor voltage $V_{CUP\_1}$ and the output voltage command $V_{UP}^*$ at the time of $\cos\phi=0$ (inductive). The horizontal axis represents time, and the vertical axis represents the value of each voltage expressed in arbitrary units. The capacitor voltage $V_{CUP\_1}$ fluctuates around the voltage command value $V_C$. In the case of a large-capacity DSMMC converter, since a large current flows through each unit converter, the voltage fluctuation becomes large, and there is a period during which a deviation from the voltage command value $V_C$ becomes large. The output voltage command $V_{UP}^*$ is a voltage command value calculated by the control device so that a desired arm current $I_{UP}$ flows.

In Figure 6, a time at which the capacitor voltage $V_{CUP\_1}$ reaches a bottom value and a time at which the output voltage command $V_{UP}^*$ reaches a peak value approximately match with each other. When the capacitor voltage $V_{CUP\_1}$ drops from the voltage command value $V_{UP}^*$, a maximum voltage that can be output from the power conversion device 102 also drops. That is, at a moment when the bottom value of the capacitor voltage $V_{CUP\_1}$ and the peak value of the output voltage command $V_{UP}^*$ overlap with each other, an overmodulation operation mode is entered in which the output voltage command $V_{UP}^*$ is greater than the maximum voltage that can be output by the power conversion device 102.

If the overmodulation operation continues, an AC current waveform of the power conversion device 102 is greatly distorted, and harmonics are increased, which may reduce a power quality of the power system 101 to which the power conversion device 102 is interconnected. Therefore, means is required to prevent the bottom value of the capacitor voltage $V_{CUP\_1}$ and the peak value of the output voltage command $V_{UP}^*$ from overlapping, and the present example solves this problem by using a circulating current.

Figure 7 is a diagram showing a relationship between the capacitor voltage $V_{CUP\_1}$ and the output voltage command $V_{UP}^*$ at the time of $\cos\phi=1$. The capacitor voltage $V_{CUP\_1}$ fluctuates around the voltage command value VC. Since the bottom value of the capacitor voltage $V_{CUP\_1}$ and the peak value of the output voltage command $V_{UP}^*$ do not overlap with each other, in the case of $\cos\phi=1$, compared to the case of $\cos\phi=0$ (inductive) in Fig. 6, the possibility of overmodulation operation is low. Therefore, there is a minimal circulating current to keep the capacitor voltages balanced.

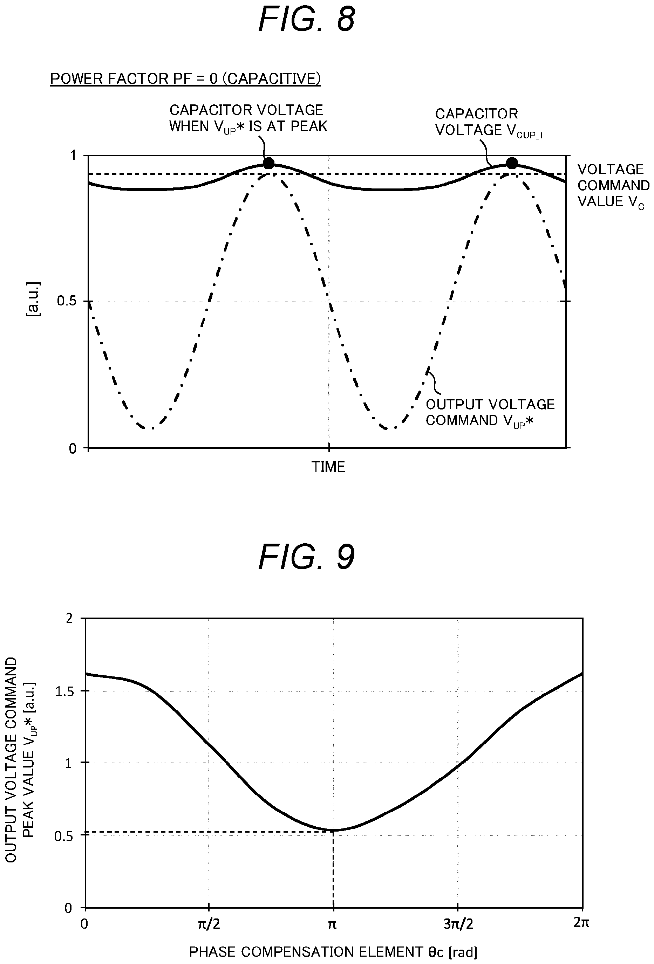

Figure 8 is a diagram showing a relationship between the capacitor voltage $V_{CUP\_1}$ and the output voltage command $V_{UP}^*$ at the time of $\cos\phi=0$ (capacitive). The capacitor voltage $V_{CUP\_1}$ fluctuates around the voltage command value VC. Since the bottom value of the capacitor voltage $V_{CUP\_1}$ and the peak value of the output voltage command $V_{UP}^*$ do not overlap with each other, in the case of $\cos\phi=0$ (capacitive), overmodulation operation is less likely than when $\cos\phi=0$ (inductive). Therefore, there is a minimal circulating current to keep the capacitor voltages balanced.

From the results of Figures 6, 7, and 8 above, the circulating current amplitude calculation means 401 is configured to decrease the circulating current required to prevent overmodulation operation to reduce the circulating current linearly to $\cos\phi=1$ with a peak value in the case of $\cos\phi=0$ (inductive). Further, when $\cos\phi=1$ to $\cos\phi=0$ (capacitive), the circulating current amplitude calculation means 401 is configured to flow the minimum circulating current for keeping the voltage balance of the capacitors. In other words, when the reactive power is capacitive, the circulating current can be reduced, so that the converter efficiency can be increased compared to the case of outputting inductive reactive power with the same apparent power. Figures 6, 7, and 8 exemplify the capacitor voltage $V_{CUP\_1}$ of the U-phase first unit converter and the U-phase output voltage command $V_{UP}^*$, but a similar description can be applied to other phases.

Next, the circulating current phase calculation means 402 will be described. The circulating current phases $\phi_{ZU}$, $\phi_{ZV}$, and $\phi_{ZW}$ in Figure 4 are calculated by the following Expressions (7) to (9).

[Ex. 7]

$$\phi_{ZU}=2\theta+\phi_C \quad (7)$$

[Ex. 8]

$$\phi_{ZV}=2\theta+\phi_C+(2\pi/3) \quad (8)$$

[Ex. 9]

$$\phi_{ZW}=2\theta+\phi_C+(-2\pi/3) \quad (9)$$

where $\phi_C$ is the phase compensation element. Also, since the phase sequence is the second harmonic, it is the negative phase of U→W→V. In the present example, the case where the voltage phase $\theta$ of the output AC voltage is doubled will be described as an example, but the present invention is not limited to this example. When the voltage phase is larger than the voltage phase $\theta$ of the output AC voltage (for example, $4\theta$, $6\theta$, etc.) and the phase order responds to the order, the same effects can be obtained.

A method for determining a phase compensation element $\phi_C$ will be described with reference to Figure 9. Figure 9 is a diagram showing a relationship between the phase compensation element $\theta c$ and the peak value of the output voltage command $V_{UP}^*$. The horizontal axis represents the phase compensation element $\theta c$, and the vertical axis represents the peak value of the output voltage command $V_{UP}^*$ expressed in arbitrary units. From Figure 9, in order to effectively reduce the peak value of the output voltage command $V_{UP}^*$, the phase compensation element $\phi c$ should be set to $\pi$(rad).

The current amplitude $|I_z^*|$ of the circulating current commands $I_{zu}^*$, $I_{zv}^*$, and $I_{zw}^*$ obtained from the circulating current amplitude calculation means 401 and the circulating current phase calculation means 402, and a sinusoidal signal having the circulating current phases $\phi_{ZU}$, $\phi_{ZV}$ and $\phi_{ZW}$ are multiplied by the multiplier 403 to generate circulating current commands $I_{zu}^*$, $I_{zv}^*$, $I_{zw}^*$. That is, the circulating current commands $I_{zu}^*$, $I_{zv}^*$, and $I_{zw}^*$ are given by the following Expressions (10) to (12).

[Ex. 10]

$$I_{zu}^* = |I_z^*| \times \sin (\phi_{zu}) \quad (10)$$

[Ex. 11]

$$I_{zv}^* = |I_z^*| \times \sin (\phi_{zv}) \quad (11)$$

[Ex. 12]

$$I_{zw}^* = |I_z^*| \times \sin (\phi_{zw}) \quad (12)$$

Returning to Figure 3, the circulating current control means 313 generates the circulating voltage target values $V_{zu}^*$, $V_{zv}^*$, and $V_{zw}^*$ as a result of proportional integral processing on differences between the circulating current commands $I_{zu}^*$, $I_{zv}^*$, and $I_{zw}^*$ and the circulating currents $I_{ZU}$, $I_{zv}$, and $I_{ZW}$ derived by the arm current separation means 301 in a regulator, to resultantly generate the circulating voltage target values $V_{zu}^*$, $V_{zv}^*$, and $V_{zw}^*$.

Further, according to Figure 3, the PWM command generation means 306 of the P-side arm converter and the PWM command generation means 307 of the N-side arm converter are supplied with addition signals of the Vow three-phase output AC voltage set values $V_U^*$, $V_V^*$, and $V_W^*$ generated by the AC current control means 302 and the circulating voltage target values $V_{zu}^*$, $V_{zv}^*$, and $V_{zw}^*$ generated by the circulating current control means 304 (in the means 306, $V_{UP}^*$, $V_{Vp}^*$, $V_{Wp}^*$, and in the means 307, $V_{UN}^*$, $V_{VN}^*$, $V_{WN}^*$) as the voltage target signals, respectively. In response to the above, the PWM command generation means 306 of the P-side arm converter and the PWM command generation means 307 of the N-side arm converter generate gate signals to be given to each positive and negative arm and each unit converter 200 in each arm, and controls the gate signals.

Thus, according to the present invention employing the above configuration, the output of the circulating current control means 304 is reflected in the output of the AC current control means 302 to obtain a target signal of the PWM command generation means 306 and 307 of the PN side arm converter. As a result, the circulating current is controlled according to the power factor.

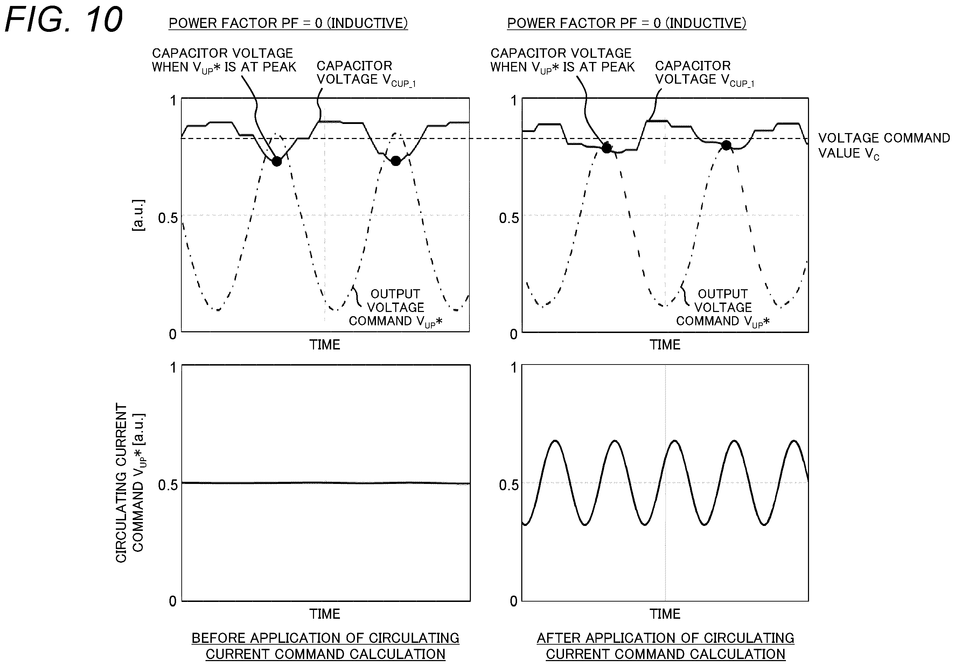

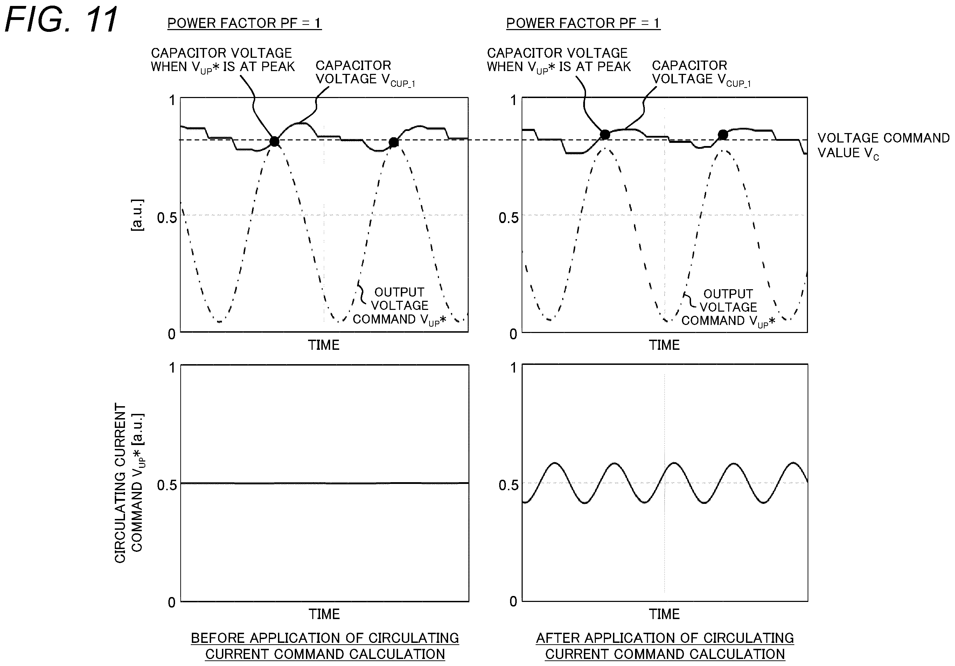

Figures 10 and 11 show examples of operating waveforms before and after application of the circulating current command calculation means 312 of the present invention. Figure 10 is an example of operating waveforms at the time of $\cos\phi = 0$ (inductive). The left side of Figure 10 is before application of the circulating current command calculation means 312, and the right side of Figure 10 is after applying the circulating current command calculation means 312. The left and right upper rows are the capacitor voltage $V_{CUP\_1}$ and the output voltage command $V_{UP}^*$, and the left and right lower rows are the circulating current command $I_{zu}^*$.

According to the left side of Figure 10 before application of the circulating current command calculation means 312, the bottom value of the capacitor voltage $V_{CUP\_1}$ and the peak value of the output voltage command $V_{UP}^*$ approximately match with each other. On the other hand, according to the right side of Figure 10 after application of the circulating current command calculation means 312, the circulating current shown in the present example reduces the voltage fluctuation of the capacitor voltage $V_{CUP\_1}$ and the output voltage command $V_{UP}^*$ can be prevented from overlapping with the bottom value of the capacitor voltage $V_{CUP\_1}$. As a result, the circulating current shown in the present invention can reduce the peak value of the output voltage command $V_{UP}^*$.

Figure 11 is an example of operating waveforms at the time of $\cos\phi = 1$. The left side of Figure 11 is before application of the circulating current command calculation means 312, and the right side of Figure 11 is after application of the circulating current command calculation means 312. The upper left and right sides of Figure 11 are the capacitor voltage $V_{CUP\_1}$ and the output voltage command $V_{UP}^*$, and the lower left and right sides of Figure 11 are the circulating current command $I_{zu}^*$.

According to the left side of Figure 11 before application of the circulating current command calculation means 312, the voltage command value $V_C$ of the capacitor voltage $V_{CUP\_1}$ and the peak value of the output voltage command $V_{UP}^*$ approximately match with each other. On the other hand, according to the right side of Figure 11 after applying the circulating current command calculation means 312, the value of the capacitor voltage $V_{CUP\_1}$ can be shifted above the command value $V_C$ at the peak of the output voltage command $V_{UP}^*$ by allowing the circulating current shown in the present example to flow. In other words, on the right side of Figure 11, the peak value of the output voltage command

$V_{UP}^*$ can be reduced by applying the circulating current command calculation means 312. Note that the circulating current command value for cos$\phi$=1 may be smaller than that for cos$\phi$=0 (inductive), as long as the minimum circulating current for maintaining the voltage balance of the capacitors can flow.

With the operation described above, there can be provided a highly efficient power conversion device since the circulating current can be minimized while avoiding overmodulation by adjusting the circulating current in accordance with the power factor.

Example 2

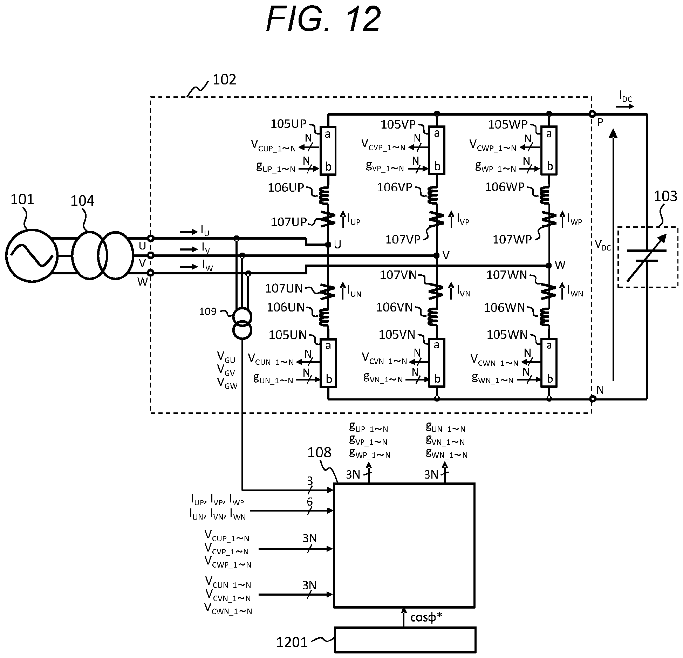

In Example 2, treatment of the power factor cos$\phi$ will be proposed with reference to Figures 12 to 14. First, Figure 12 is a diagram showing a configuration example of a power conversion device according to Example 2 of the present invention. The signs in the figure that overlap with those in Figure 1 have the same meanings, so that descriptions thereof will be omitted, but the main circuit configuration remains as it is, and the control device side is changed. Figure 12 differs from Figure 1 of Example 1 in that a power factor command cos$\phi^*$ sent from the host control device 1201 to the control device 108 is input to the control device 108, and there is provided an interface for sending the power factor command cos$\phi^*$ from the host control device 1201 to the control device 108.

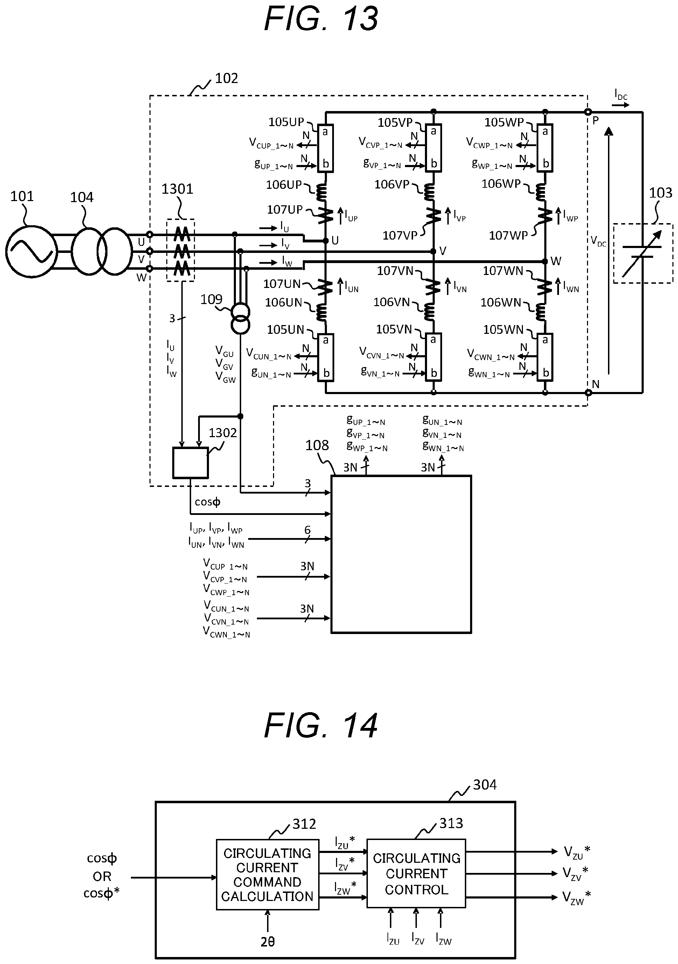

Another configuration example of the power conversion device according to Example 2 in Figure 13 differs from Figure 1 of Example 1 in that an AC current detector 1301 and a power factor detector 1302 are newly provided and that there is provided an interface for sending the power factor cos$\phi$ detected by the power factor detector 1302 to the control device 108.

Figure 14 is a diagram showing a configuration example of circulating current command calculation means according to Example 2 of the present invention. In this example, since either the power factor command cos$\phi^*$ or the power factor cos$\phi$ is used as the input of the control device 108, the PQ calculation means 309, the filter circuit 310, and the power factor calculation means 311 in the circulating current control means 304 are unnecessary.

According to the present example, there can be provided a power conversion device using an inexpensive microcomputer since a calculation time can be reduced by reducing the number of calculation means in the control device.

Example 3

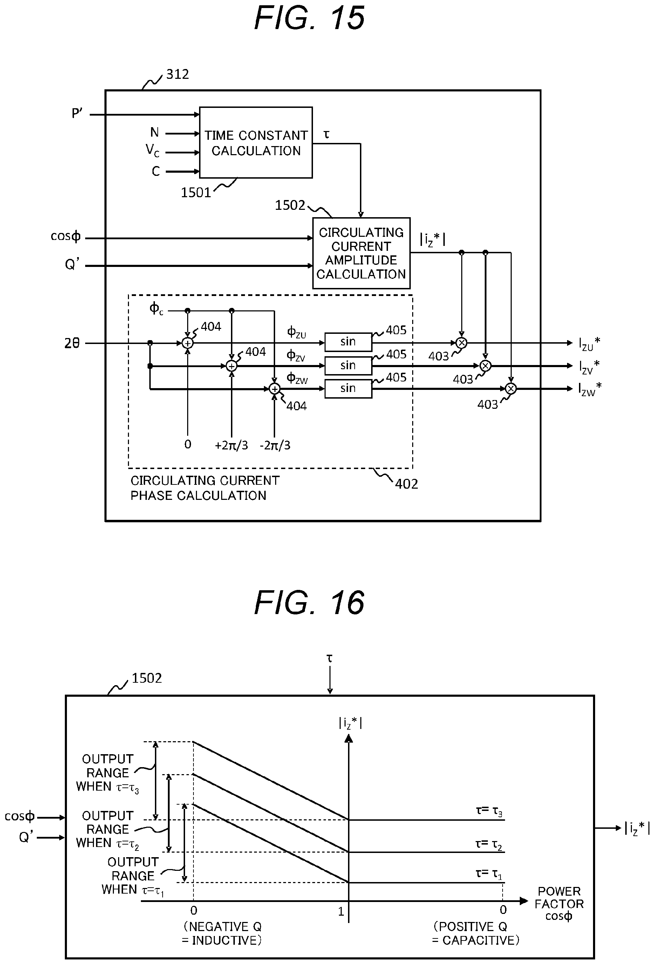

Figure 15 is a diagram showing a configuration example of circulating current command calculation means according to Example 3 of the present invention. The signs in the figure that overlap with those in Figure 4 have the same meanings, so that descriptions thereof will be omitted. Circulating current command calculation means 312 in Figure 15 differs from Example 1 of Figure 4 in that there is provided a time constant calculation means 1501. Also, circulating current amplitude calculation means 1502 is different.

First, the time constant calculation means 1501 calculates a time constant $\tau$ for inputs of active power P', the number N of unit converters per arm converter, a voltage command value VC of the capacitor voltage, and a capacitance C of the capacitor. The longer the time constant $\tau$, the smaller the voltage fluctuation when the same current flows through the capacitor, so that a necessary circulating current can be reduced. The time constant $\tau$ is calculated by the following Expression (13). This time constant $\tau$ is defined as a time required to discharge electrostatic energy of the capacitor at reference power.

[Expression 13]

$$\tau = \{(1/2) \times C \times VC^2\} / \{P' / (6 \times N)\}: \quad (13)$$

Next, the circulating current amplitude calculation means 1502 will be described with reference to Figure 16. Figure 16 is an input/output characteristic diagram of the circulating current amplitude calculation means according to Example 3 of the present invention. The circulating current amplitude calculation means 1502 of Example 3 differs from Example 1 in that the circulating current amplitude can be selected according to a value of the time constant.

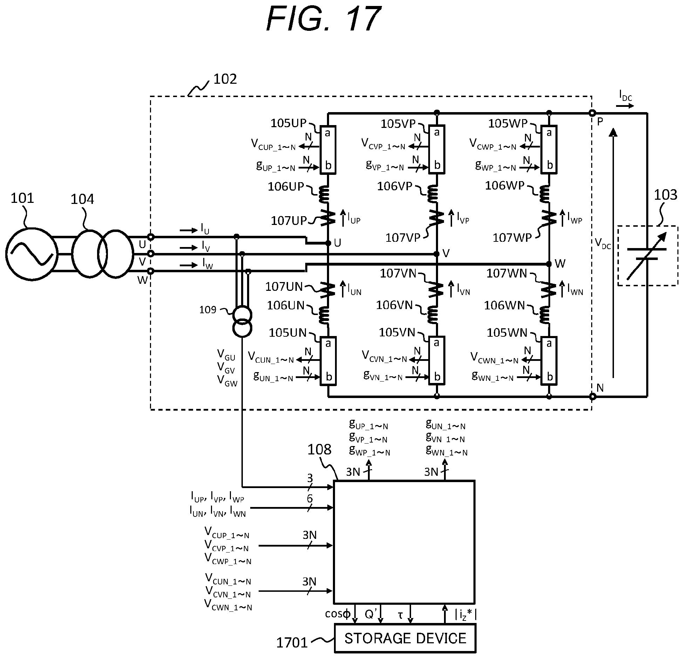

Figure 17 is a circuit diagram showing another configuration example of the circulating current amplitude calculation means according to Example 3 of the present invention. Figure 17 differs from Figure 1 of Example 1 in that there are provided a storage device 1701 and an interface necessary for exchanging input/output signals between the storage device 1701 and the control device 108. The storage device 1701 is, for example, a device such as a register, flash memory, or hard disk drive that saves and stores data.

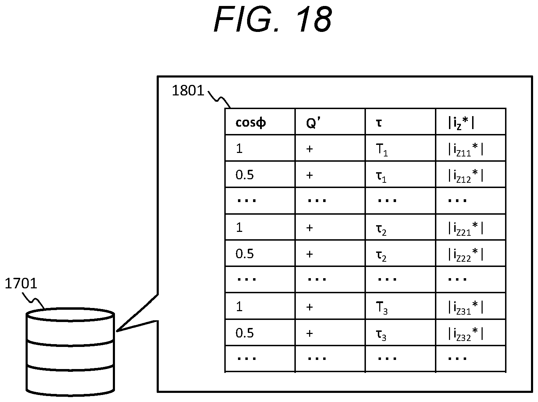

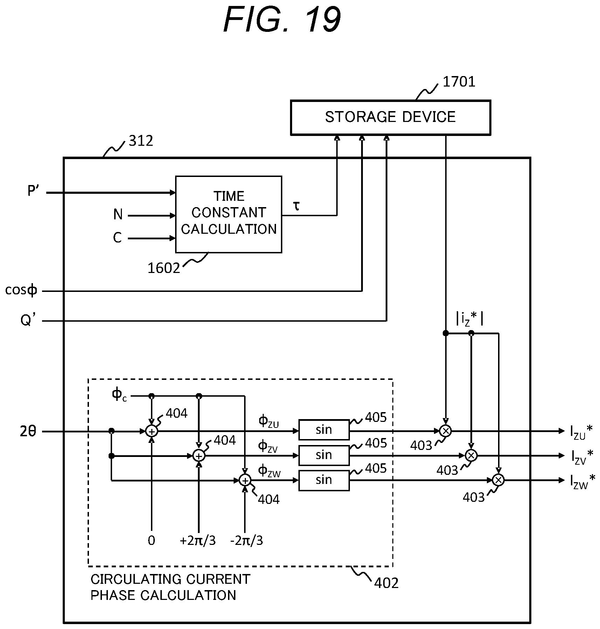

Figure 18 shows a storage device according to Example 3 of the present invention. Figure 19 is a block diagram of circulating current command calculation means according to Example 3 of the present invention. The storage device 1701 has a database 1801 inside, and selects, from the database 1801, a circulating current amplitude |IZ*| that matches the three inputs of the power factor cos$\phi$, the reactive power Q', and the time constant sent from the control device 108, and sends the selected circulating current amplitude to the circulating current command calculation means 312 in the control device 108.

According to the present example, even when the operating conditions of the power conversion device are changed, the circulating current amplitude can be automatically adjusted according to a change in the time constant τ. Therefore, a power conversion device that can select an optimum circulating current for each operating condition can be provided.

Reference Signs List

101: power system, 102: power conversion device, 103: variable DC voltage source, 104: transformer, 105UP, 105UN, 105VP, 105VN, 105WP, 105WN: arm converter, 106UP, 106UN, 106VP, 106VN, 106WP, 106WN: circulating current suppression reactor, 107UP, 107UN, 107VP, 107VN, 107WP, 107WN: current detector, 108: control device, 109: AC voltage detector, 201, 202: switching element, 203: switching circuit, 204: capacitor, 205: DC voltage detector, 206: cell control device, 207: gate drive circuit, 301: arm current separation means, 302: AC current control means, 303: DC current control means, 304: circulating current control means, 305: phase detection means, 306, 307: PWM command generation means, 308: coordinate transformation means, 309: PQ calculation means, 310: filter circuit, 311: power factor calculation means, 312: circulating current command calculation means, 313: circulating current control means, 401, 1502: circulating current amplitude calculation means, 402: circulating current phase calculation means, 403: multiplier, 1201: host control device, 1301: AC current detector, 1302: power factor detector, 1501: time constant calculation means, 1701: storage device, 1801: database

**Claims**

1. A control device for a modular multi-level power conversion device including one or more arm converters per AC phase, each having a plurality of unit converters each with an energy storage element connected in series, the control device for the power conversion device comprising:

   AC current control means for controlling an AC current to a desired value by feedback;
   circulating current control means for controlling a circulating current flowing through the arm converter of each phase of the AC current of the modular multi-level power conversion device to a circulating current command value by feedback; and
   PWM command generation means for generating and controlling a gate signal of the unit converter configuring the arm converter according to an AC voltage target of each AC phase obtained by correcting an output of the AC current control means according to an output of the circulating current control means,
   wherein the circulating current control means includes circulating current command calculation means for calculating an amplitude of the circulating current command value according to a power factor of the power conversion device.

2. The control device for a power conversion device according to claim 1,
   wherein the circulating current command value is a current having a higher frequency than a frequency of the AC voltage.

3. The control device for a power conversion device according to claim 2,
   wherein an angular frequency of the circulating current command value is a negative phase current that rotates at twice the angular frequency of the AC power supply, and a phase difference with the AC power supply voltage of each phase is 180 degrees.

4. The control device for a power conversion device according to any one of claims 1 to 3,
   wherein the circulating current command value is changed according to a time constant determined by a ratio of active power per unit converter and electrostatic energy stored in the energy storage element.

5. The control device for a power conversion device according to any one of claims 1 to 4,
   wherein the power conversion device includes a storage device and an interface for transmitting and receiving signals between the storage device and the control device, and the control device selects an circulating current amplitude that matches three inputs of a power factor, reactive power, and a time constant sent from the control device from a database within the storage device, and sends the selected circulating current amplitude to the circulating current command calculation means within the control device to calculate the circulating current command value.

6. The control device for a power conversion device according to any one of claims 1 to 5, further comprising an interface that inputs the power factor detected by external power factor detection means into the control device.

7. The control device for a power conversion device according to any one of claims 1 to 6, further comprising control means for performing control to reduce the circulating current when capacitive reactive power is output from the power conversion device to increase a converter efficiency compared to outputting inductive reactive power with the same apparent power.

8. The control device for a power conversion device according to any one of claims 1 to 7,
wherein the amplitude of the circulating current command value is kept constant when capacitive reactive power is output from the power conversion device, and is greater as the power factor is lower when the inductive reactive power with the same apparent power is output from the power conversion device.

9. The control device for a power conversion device according to claim 8,
wherein the amplitude, which is kept constant when the capacitive reactive power is output from the power conversion device, is the same as the amplitude when the power factor is 1 when the inductive reactive power with the same apparent power is output from the power conversion device.

10. A control method for a modular multi-level power conversion device including one or more arm converters for each phase of AC current, each having a plurality of unit converters having energy storage elements connected in series, comprising:

   generating and controlling a gate signal of the unit converter configuring the arm converter according to an AC voltage target of each AC phase obtained by correcting an AC current control output for controlling an AC current to a desired value by feedback with a circulating current control output for controlling a circulating current flowing through the arm converter of each AC phase of the modular multi-level power conversion device to a circulating current command value by feedback; and
   determining an amplitude of the circulating current command value according to the power factor of the power conversion device.

11. The control method for a power conversion device according to claim 10,
wherein the amplitude of the circulating current command value is kept constant when capacitive reactive power is output from the power conversion device, and is greater as the power factor is lower when the inductive reactive power with the same apparent power is output from the power conversion device.

12. The control method for a power conversion device according to claim 11,
wherein the amplitude, which is kept constant when the capacitive reactive power is output from the power conversion device, is the same as the amplitude when the power factor is 1 when the inductive reactive power with the same apparent power is output from the power conversion device.

# FIG. 1

# FIG. 2

FIG. 3

# FIG. 4

# FIG. 5

# FIG. 6

POWER FACTOR PF = 0 (INDUCTIVE)

CAPACITOR VOLTAGE
WHEN $V_{UP}*$ IS AT PEAK

CAPACITOR
VOLTAGE $V_{CUP\_1}$

VOLTAGE
COMMAND
VALUE $V_C$

OUTPUT VOLTAGE
COMMAND $V_{UP}*$

[a.u.]

TIME

# FIG. 7

POWER FACTOR PF = 1

CAPACITOR VOLTAGE
WHEN $V_{UP}*$ IS AT PEAK

CAPACITOR
VOLTAGE $V_{CUP\_1}$

VOLTAGE
COMMAND
VALUE $V_C$

OUTPUT VOLTAGE
COMMAND $V_{UP}*$

[a.u.]

TIME

## FIG. 8

POWER FACTOR PF = 0 (CAPACITIVE)

CAPACITOR VOLTAGE
WHEN $V_{UP}*$ IS AT PEAK

CAPACITOR
VOLTAGE $V_{CUP\_1}$

VOLTAGE
COMMAND
VALUE $V_C$

[a.u.]

OUTPUT VOLTAGE
COMMAND $V_{UP}*$

TIME

## FIG. 9

OUTPUT VOLTAGE COMMAND
PEAK VALUE $V_{UP}*$ [a.u.]

PHASE COMPENSATION ELEMENT θc [rad]

FIG. 10

FIG. 11

POWER FACTOR PF = 1

CAPACITOR VOLTAGE
WHEN $V_{UP}*$ IS AT PEAK    CAPACITOR
VOLTAGE $V_{CUP\_1}$

1

[a.u.]

0.5

0

TIME

CAPACITOR VOLTAGE
WHEN $V_{UP}*$ IS AT PEAK    OUTPUT
VOLTAGE
COMMAND $V_{UP}*$

POWER FACTOR PF = 1

CAPACITOR VOLTAGE
WHEN $V_{UP}*$ IS AT PEAK    CAPACITOR
VOLTAGE $V_{CUP\_1}$

1

VOLTAGE COMMAND
VALUE $V_C$

0.5

OUTPUT
VOLTAGE
COMMAND $V_{UP}*$

0

TIME

CIRCULATING CURRENT
COMMAND $V_{UP}*$ [a.u.]

1

0.5

0

TIME

BEFORE APPLICATION OF CIRCULATING
CURRENT COMMAND CALCULATION

1

0.5

0

TIME

AFTER APPLICATION OF CIRCULATING
CURRENT COMMAND CALCULATION

EP 4 160 901 A1

19

# FIG. 12

# FIG. 13

# FIG. 14

# FIG. 15

# FIG. 16

# FIG. 17

# FIG. 18

1801

| cosφ | Q' | τ | $|i_z^*|$ |
|------|-----|-----|-----------|
| 1 | + | $T_1$ | $|i_{z11}^*|$ |
| 0.5 | + | $\tau_1$ | $|i_{z12}^*|$ |
| ... | ... | ... | ... |
| 1 | + | $\tau_2$ | $|i_{z21}^*|$ |
| 0.5 | + | $\tau_2$ | $|i_{z22}^*|$ |
| ... | ... | ... | ... |
| 1 | + | $T_3$ | $|i_{z31}^*|$ |
| 0.5 | + | $\tau_3$ | $|i_{z32}^*|$ |
| ... | ... | ... | ... |

1701

# FIG. 19

<div align="center">

### INTERNATIONAL SEARCH REPORT

</div>

| | |
|---|---|
| | International application No. |
| | **PCT/JP2021/015556** |

**A.    CLASSIFICATION OF SUBJECT MATTER**

*H02M 7/49*(2007.01)i; *H02M 7/797*(2006.01)i
FI:    H02M7/49; H02M7/797

According to International Patent Classification (IPC) or to both national classification and IPC

**B.    FIELDS SEARCHED**

Minimum documentation searched (classification system followed by classification symbols)

H02M7/49; H02M7/797

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| A | JP 2018-196237 A (TOSHIBA CORP.) 06 December 2018 (2018-12-06)<br>entire text, all drawings | 1-12 |
| A | JP 2012-44839 A (TOKYO INSTITUTE OF TECHNOLOGY) 01 March 2012 (2012-03-01)<br>entire text, all drawings | 1-12 |
| A | JP 6131030 B2 (HITACHI, LTD.) 17 May 2017 (2017-05-17)<br>entire text, all drawings | 1-12 |
| A | JP 2005-116191 A (MITSUI ENGINEERING & SHIPBUILDING CO., LTD.) 28 April 2005<br>(2005-04-28)<br>entire text, all drawings | 1-12 |
| A | JP 2010-512133 A (SIEMENS AG.) 15 April 2010 (2010-04-15)<br>entire text, all drawings | 1-12 |
| A | JP 2013-251933 A (HITACHI, LTD.) 12 December 2013 (2013-12-12)<br>entire text, all drawings | 1-12 |

☑ Further documents are listed in the continuation of Box C.          ☑ See patent family annex.

| | |
|---|---|
| \*    Special categories of cited documents:<br>"A"    document defining the general state of the art which is not considered to be of particular relevance<br>"E"    earlier application or patent but published on or after the international filing date<br>"L"    document which may throw doubts on priority claim(s) or which is cited to establish the publication date of another citation or other special reason (as specified)<br>"O"    document referring to an oral disclosure, use, exhibition or other means<br>"P"    document published prior to the international filing date but later than the priority date claimed | "T"    later document published after the international filing date or priority date and not in conflict with the application but cited to understand the principle or theory underlying the invention<br>"X"    document of particular relevance; the claimed invention cannot be considered novel or cannot be considered to involve an inventive step when the document is taken alone<br>"Y"    document of particular relevance; the claimed invention cannot be considered to involve an inventive step when the document is combined with one or more other such documents, such combination being obvious to a person skilled in the art<br>"&"    document member of the same patent family |
| Date of the actual completion of the international search<br><br>**25 June 2021** | Date of mailing of the international search report<br><br>**06 July 2021** |
| Name and mailing address of the ISA/JP<br><br>**Japan Patent Office (ISA/JP)**<br>**3-4-3 Kasumigaseki, Chiyoda-ku, Tokyo 100-8915**<br>**Japan** | Authorized officer<br><br><br><br>Telephone No. |

Form PCT/ISA/210 (second sheet) (January 2015)

**INTERNATIONAL SEARCH REPORT**

International application No.

**PCT/JP2021/015556**

| C. | DOCUMENTS CONSIDERED TO BE RELEVANT | |
|---|---|---|
| Category* | Citation of document, with indication, where appropriate, of the relevant passages | Relevant to claim No. |
| A | KR 10-2016-0072499 A (LSIS CO., LTD.) 23 June 2016 (2016-06-23)<br>entire text, all drawings | 1-12 |

Form PCT/ISA/210 (second sheet) (January 2015)

**INTERNATIONAL SEARCH REPORT**
Information on patent family members

International application No.

**PCT/JP2021/015556**

| Patent document cited in search report | | | Publication date (day/month/year) | Patent family member(s) | | | Publication date (day/month/year) |
|---|---|---|---|---|---|---|---|
| JP | 2018-196237 | A | 06 December 2018 | (Family: none) | | | |
| JP | 2012-44839 | A | 01 March 2012 | (Family: none) | | | |
| JP | 6131030 | B2 | 17 May 2017 | US entire text, all drawings EP | 2013/0208519 2645552 | A1 A2 | |
| JP | 2005-116191 | A | 28 April 2005 | (Family: none) | | | |
| JP | 2010-512133 | A | 15 April 2010 | US entire text, all drawings WO CN | 2010/0067266 2008/067784 101548458 | A1 A1 A | |
| JP | 2013-251933 | A | 12 December 2013 | (Family: none) | | | |
| KR | 10-2016-0072499 | A | 23 June 2016 | (Family: none) | | | |

Form PCT/ISA/210 (patent family annex) (January 2015)

**EP 4 160 901 A1**

**Patent documents cited in the description**

- JP 2010512133 W

- JP 2013251933 A